# EUROPEAN PATENT SPECIFICATION

(11) **EP 2 835 888 B1**
(45) Date of publication and mention of the grant of the patent: **15.03.2017**
(21) Application number: 14179530.2
(22) Date of filing: 01.08.2014
(51) Int. Cl.: H02K 1/24, H02K 1/28

(54) **A rotor for an electrical machine**
Rotor für eine elektrische Maschine
Rotor pour machine électrique

(30) Priority: 05.08.2013 GB 201313993
(43) Date of publication of application: 11.02.2015
(73) Proprietor: Nidec SR Drives Ltd., Harrogate North Yorkshire HG3 1PR (GB)
(72) Inventor: Randall, Steven Paul, Leeds, Yorkshire LS16 8BS (GB); Dickinson, Phillip George, Harrogate, Yorkshire HG3 2NX (GB)
(74) Representative: Korenberg, Alexander Tal

(56) References cited:
- EP-A2- 2 388 889
- JP-A- 2006 254 662
- US-A1- 2012 256 516
- BJORN RIEMER ET AL: "Rotor design of a high-speed Permanent Magnet Synchronous Machine rating 100,000 rpm at 10kW", ENERGY CONVERSION CONGRESS AND EXPOSITION (ECCE), 2010 IEEE, IEEE, PISCATAWAY, NJ, USA, 12 September 2010 (2010-09-12), pages 3978-3985, XP031787018, ISBN: 978-1-4244-5286-6
- CALVERLEY S D ET AL: "Calculation of centrifugal stress in four-pole switched-reluctance rotors", IEE PROCEEDINGS: ELECTRIC POWER APPLICATIONS, INSTITUTION OF ELECTRICAL ENGINEERS, GB, vol. 150, no. 1, 10 January 2003 (2003-01-10), pages 97-105, XP006019600, ISSN: 1350-2352, DOI: 10.1049/IP-EPA:20020687

## Description

The present disclosure generally relates to the design of a rotor for a high-speed electrical machine. It is particularly beneficial for rotors with a relatively small number of salient poles, as commonly used on reluctance machines and permanent magnet machines.

Electrical machines in general are constructed from laminations of electrical sheet steel, the resulting structure being used to carry the magnetic flux on which the machine depends for its operation. The structure is laminated to reduce the effect of eddy currents, which flow in the steel due to the time rate of change of the flux. Usually only machines with unvarying flux have unlaminated structures. For example, the field structure of a dc machine can be unlaminated (i.e. made of solid metal), though even in these machines a laminated structure is often adopted in order to reduce the transient response time when the machine is subjected to a new operating condition. The thickness of the laminations is usually based on the frequency of flux variation in the machine and is a trade-off between cost of manufacture and performance of the machine.

The laminations are stacked to provide a pack or core of the desired length. The stationary laminations form the stator core and are typically inserted in a frame or provided with some other structure to secure them against the torque reaction experienced during operation. The moving laminations form the rotor core and are typically mounted on a shaft which is supported by a bearing system.

One example of an electrical machine which uses this arrangement is the switched reluctance machine. A general treatment of electrical drives which incorporate switched reluctance machines can be found in various textbooks, e.g. "Electronic Control of Switched Reluctance Machines" by TJE Miller, Newnes, 2001, incorporated herein by reference. More detail is provided in the paper "The characteristics, design and application of switched reluctance motors and drives" by Stephenson and Blake, PCIM'93, Nürnberg, 21-24 June 1993, incorporated herein by reference.

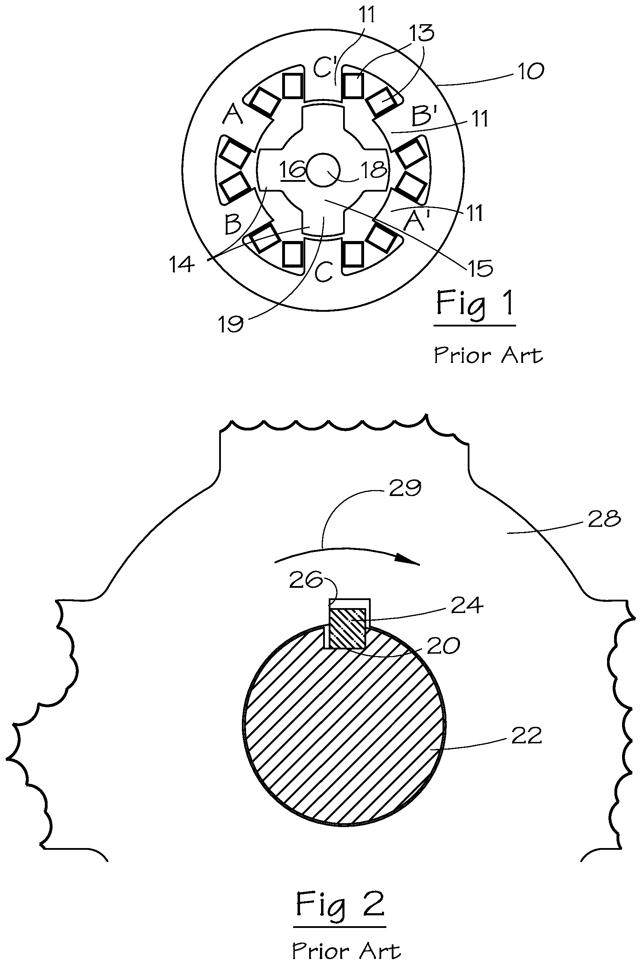

Figure 1 shows typical rotor and stator laminations for a switched reluctance machine. Both laminations have salient poles and some or all of the stator poles carry coils which are interconnected to form one or more phase windings. In the example shown, the rotor lamination 16 has four poles 14, the stator lamination 10 has six poles 11 with six coils 13 connected in opposite pairs to form three phase windings, A, B & C. The rotor laminations are mounted on a shaft 18. As is well known in the art, the number of stator and rotor poles, the number of coils and the number of phase windings can vary widely and are selected by the designer to suit the criteria of the design in hand.

The salient poles 14 of the rotor lamination extend radially outward from a core portion 15 of the rotor lamination. The core portion has a cut-out for accommodating the shaft 18. A root portion 19 of the salient pole is adjacent to the core portion 15. An outer contour or profile of the lamination defines: a fillet radius at the root portion, smoothly joining the salient pole to the core portion; a pole face at a radially outer aspect of the salient pole; and, typically, straight sides between the pole face and the fillet radii on each side of the salient pole. Typically, a centre line of the salient pole coincides with a radius through the axis of rotation.

Typically, the rotor does not carry any windings, so the rotor assembly is generally much more robust than for other types of machine which have windings or magnets mounted on the rotor. While this characteristic enables operation of the rotor at higher speeds than would normally be tolerated by other machines, there are applications which still demand ever higher speeds, e.g., drives for flywheels, turbines and material testing equipment.

As indicated above, the pack of laminations forming the rotor (or the solid rotor, if an unlaminated structure is adopted) is mounted on the shaft. The method of mounting has to be selected to take account of the torque developed by the machine. The circumferential forces acting on the outer profile of the rotor have to be transmitted across the interface between the inner profile of the rotor and the surface of the shaft so that torque is coupled to the load. Methods of securing the rotor to the shaft generally fall into two categories, as will now be briefly described.

The first method is to provide one or more driving surfaces between the rotor pack and the shaft. A common embodiment of this method is illustrated in Figure 2. The shaft has a "keyway", i.e., a slot 20 with a rectangular cross section running axially along the shaft 22, into which a "key" 24 of suitably tough material is fitted and bears on an edge 26 formed in the bore of the rotor pack 28. Typically, the keyway is milled into the shaft as part of the shaft manufacture and the corresponding aperture is punched into the lamination. Figure 2 shows an enlarged view of a typical arrangement, where the clearances have been exaggerated for clarity and where torque is being transmitted from the rotor in the direction shown by arrow 29. This arrangement is very common in machines from a few kilowatts upwards running at modest speeds. It has advantages of being relatively simple to produce and the machining operations are well understood. However, since there are inevitably gaps around the key 24, the general arrangement is inherently one which produces an out-of-balance rotor, so balance correction is required as a further operation. Additionally, the arrangement is not guaranteed to be stable at high speeds, since it is possible for the key to move outwards under centrifugal stress, thus rendering the machine out of balance and imposing large forces on the bearing system. Further, such arrangements are often considered unsuitable for reversing loads.

A variation of this method is to form a tongue on the inside of the lamination pack which engages in the keyway but, unless the clearances are generous, it is usually difficult to assemble the rotor pack onto the shaft. The increased clearances exacerbate the out-of-balance problem, so this solution is seldom used.

The second method is to assemble the shaft into the rotor pack with an interference fit, i.e., the outside diameter of the shaft is very slightly greater than the inside diameter of the rotor bore. The shaft is then pressed or shrunk to its final position, so that the elastic deformation of the two components produces a clamping force on the shaft. The degree of interference must be carefully controlled, since only a small increase in the interference may cause the components to be damaged during assembly. Sometimes the shaft is splined or knurled to reduce the stiffness of the surface and reduce the assembly forces. Sometimes the shaft is cooled (to reduce its diameter) and/or the rotor pack is heated (to increase its diameter) to reduce the amount of interference during the assembly process. When the components return to the ambient temperature, the clamping force is increased.

US2012/0256516 and JP2006254662 disclose examples of a rotor of an electrical machine secured to a rotor shaft by an interference fit.

Although assembling with an interference fit is widely used, especially on small machines, it is difficult to use on larger machines because of the large forces required to assemble the components. There is also a further problem when it is used at high speeds, as will now be explained.

When the rotor assembly is spun, the centrifugal forces act to stretch the components outwards. Because the rotor laminations have a hole in their centre, they stretch more than the solid shaft. As the speed rises, this difference in stretching reduces the interference fit and eventually a speed is reached where the clamping force is zero. There is then no way of transmitting the electromagnetic torque produced by the rotor to the load.

This is a significant design problem associated with high-speed rotors and is not easily solved, since simply increasing the interference fit between the shaft and rotor pack may damage the components during assembly. Further, as the machine size decreases, the required manufacturing tolerances become tighter and tighter, making the component cost much greater. There is therefore a need for a simple, cost-effective solution to this problem.

In a first aspect of the invention there is provided a rotor component as set out in claim 1.

In some embodiments, a rotor component for a rotor of a rotating electrical machine defines a bore, a plurality of salient poles arranged around the bore and one or more slots through the rotor component along the bore. The bore is arranged to accept a shaft defining an axis of rotation for the rotor component. Each slot has a circumferential dimension that is larger than its largest radial dimension. The rotor component further defines a respective bridge portion disposed between each slot and the bore. The respective bridge portion is proportioned such that a pressure exerted by the respective bridge portion on a shaft in the bore increases when the rotor component is rotated about the axis of rotation. As a result of the increased pressure, the clamping force between the rotor component and the shaft is increased.

The rotor component may provide a lamination for stacking to form a rotor or may provide a single rotor component to provide a rotor when mounted on a shaft, without stacking of laminations. In either case (and generally), the rotor component has a face extending between the bore and an outer profile of the rotor component at each end and the slots may extend from face to face, that is, fully through the rotor component. Whether the slot extends through the rotor component fully or not, it extends in a direction along the bore (that is, it extends axially), so that it defines a pair of facing walls along its angular or circumferential extent.

In some embodiments, the number of slots is less than or equal to the number of poles. In some embodiments, the number of slots is equal to the number of poles. Distributing a relatively small number of slots around the bore is believed to improve beneficial effects by distributing/increasing the pressure referred to above.

In some embodiments, each slot and respective bridge portion may be intersected by a respective interpolar axis bisecting an angle between a pair of adjacent poles and intersecting the access of rotation. In arrangements where the bridge portion is located generally between adjacent poles, an improved effect is believed to occur due to the increased stiffness of the portions of the rotor component in the region of the poles as compared to the region in between, thus increasing a cantilever effect, as described with reference to the specific example below. In some embodiments, each slot and respective bridge portion is bisected by the respective interpolar axis.

In some embodiments, each slot and respective bridge portion may have an angular extent of 60% to 90%, preferably about 80% of an angular spacing between respective adjacent poles. In some embodiments, the angular extent may be greater than 40%, 45%, 50%, 55%, 65%, 70%, 75%, 80%, 85% or 90% of the angular spacing. In some embodiments, the total circumferential lengths of the slots (the individual circumferential length of each slot added together) maybe in the region of 60% to 90%, preferably 80% of the circumference of a circumscribing circle of the slots. In some embodiments, the total circumferential extent may be greater than 40%, 45%, 50%, 55%, 65%, 70%, 75%, 80%, 85% or 90% of the circumference.

In some embodiments, the bridge portion may be profiled to have a constant radial extent over at least a portion of its circumferential extent. For example, this may facilitate the manufacture of the rotor component.

In some embodiments, each bridge portion may have a radial dimension of less than 5% of the largest radial dimension of the rotor component. In some embodiments, each bridge portion may have a radial dimension of less than 5% of the largest radial dimension of the interpolar region between adjacent poles of the rotor. In some embodiments, each bridge portion may have a radial dimension of less than 3%, 7% or 10% of the largest or smallest radial dimension of the rotor component or of the interpolar region between adjacent poles of the rotor. The width of the slot may be less than 5mm, for example 3 mm, or may be less than 2mm, or 1mm or less, for example 0.5mm. Ideally, to have no effect on the magnetic performance and the mechanical strength of the rotor, the slot width should be zero. In practice, however, this is not achievable because of manufacturing constraints, so some small reduction in magnetic performance and/or mechanical strength is accepted so as to reap the benefits of the invention. In some embodiments, the one or more slots are adjacent the bore.

In some embodiments, each slot may have rounded end portions. The rounded end portions may be wider than a portion of the slot between the end portions.

In a second aspect of the invention, there is provided a rotor for a rotating electrical machine, the rotor comprising one or more rotor components as described above, mounted for rotation on a shaft.

In some embodiments, the one or more rotor components may be bonded to the shaft with an adhesive. In these embodiments, the invention reduces the tensile stress on the adhesive over at least part of the bonded interface. The rotor may comprise a plurality of rotor components stacked along the shaft. The rotor components may be laminations as typically used in the construction of rotors for electrical machines. Alternatively, the rotor may comprise a single rotor component as described above, for example manufactured by machining or by compaction of insulated iron powder. For example, a suitable material may be soft magnetic composite material (SMC).

The electrical machine may be a reluctance machine, for example a switched reluctance machine. Rotors with one or more rotor components as described above will be particularly useful for switched reluctance machines, which are inherently suitable for high speed operation and therefore stand to benefit in high speed operation from the described arrangements.

Other aspects and advantages of the apparatus and methods disclosed herein will become apparent upon reading the following detailed description of examples with reference to the accompanying drawings, in which:
Figure 1 shows typical rotor and stator laminations for a switched reluctance machine;
Figure 2 shows an enlarged view of a rotor lamination pack keyed to a shaft;
Figure 3 shows the profile of a rotor component according to an embodiment of the invention;
Figure 4 shows the distortion of the rotor component of Figure 3 when rotated at high speed;
Figure 5 shows the distortion of the rotor component of Figure 3 mounted on a shaft when rotated at high speed, in a detailed partial view;
Figure 6 shows an embodiment which may result in reduced stress in the component; and
Figure 7 shows a mesh representation of a rotor structure as used in finite element analysis.

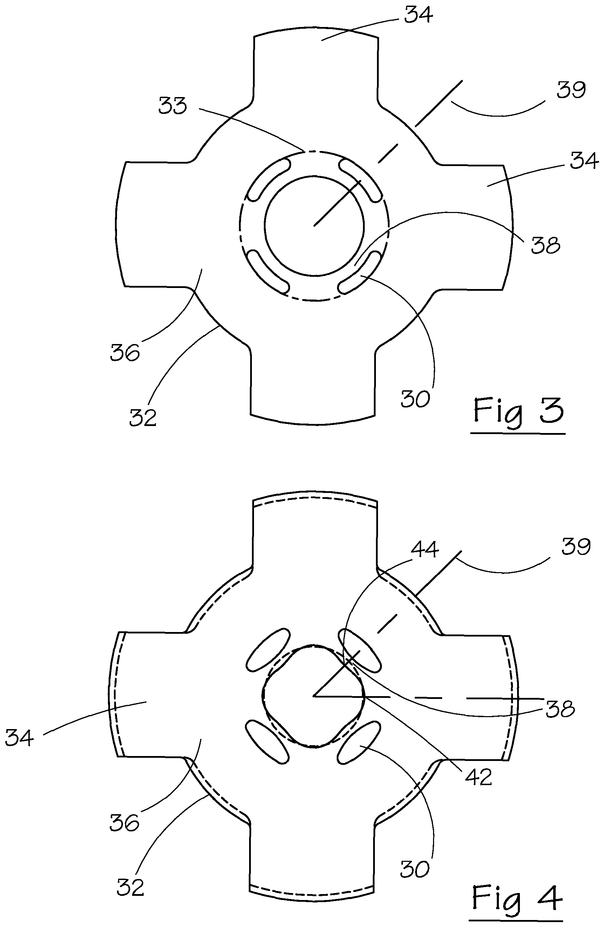

Figure 3 shows an embodiment applied to a rotor lamination 36 in which the rotor lamination 16 of Figure 1 has been modified by the addition of slots 30 aligned (e.g. centred) on the interpole axes 39 of each pair of the poles 34 (i.e. specifically the axes coinciding with a radius bisecting the angle between the respective center axes of the two poles, in this example). One slot is provided on each interpole axis 39. In this Figure, the dimensions have been chosen to aid description and are not necessarily representative of a practical design. The slots are curved to be concentric with the bore of the lamination, occupy approximately 50% of their circumscribing circle 33 (i.e. the smallest circle which entirely contains the slots 30) and are situated so as to leave a bridge of material 38 on the interpole axis 39. In this example, the bridge has a thickness approximately the same width as the radial width of the slots.

These slots are situated in a region of the magnetic circuit where the flux density is relatively low, so their impact on the magnetic performance of the lamination will be small.

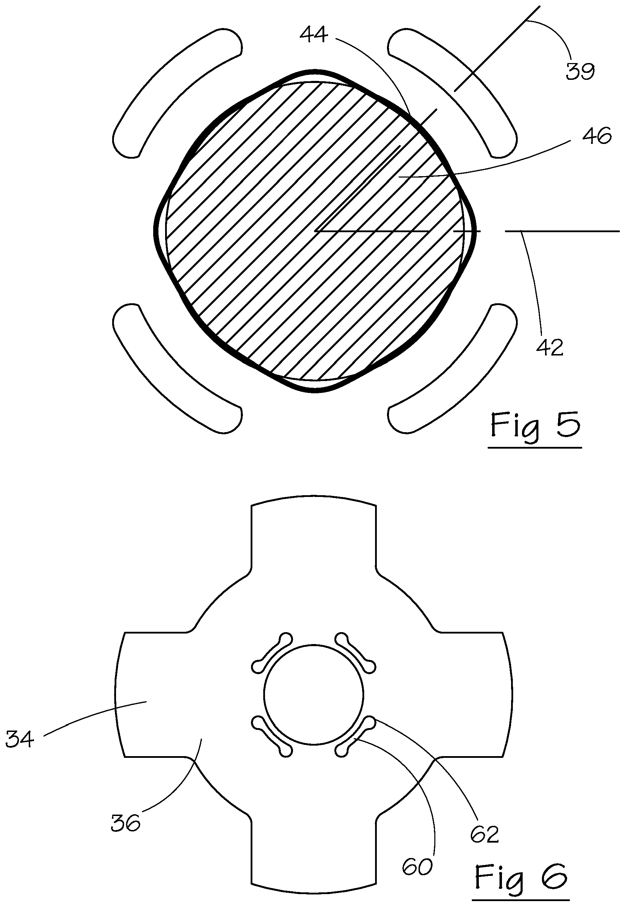

As has been described above, the rotor lamination expands outwards when it is rotated. Figure 4 illustrates the type of distortion which would be experienced by the lamination of Figure 3 if it had no shaft in it but was spun at high speed. For reference, the lamination diameter could be around 50mm and the speed could be around 100000rev/min. For comparison, the original outline of the lamination is shown dotted. It will be seen from Figure 4 that the poles 34 are elongated. The interpolar profile 32 also grows outward. These effects would have been intuitively expected. At the bore of the lamination, however, the results are somewhat unexpected. In the region 42 (in this example a region to both sides of a radius on which the pole is centred), an area which is relatively stiff mechanically, the bore expands as might be expected. However, in the region 44 on the interpole axis 39, the results are unexpected because the bore contracts in this area. This is a result of the cantilever effect of the material on the radius on which the pole is centred being pulled outwards and the bridge 38 being de-coupled from the rest of the material on the interpole axis 39 by the slot 30. The inward movement of the bridge 38 is proportional to the speed of the rotor, so the faster the rotor is spun, the more it contracts on this axis. When a shaft is inserted into the lamination bore, the situation changes, since the lamination is constrained by the shaft in the regions 44 where the bridge 38 interacts with the shaft, so that the regions 44 are unable to move inwards. Figure 5 shows an expanded view of the lamination of Figure 4 with a shaft 46 fitted. In this example, the shaft diameter has been chosen so that, at zero speed, the shaft and lamination bore diameters are exactly equal. In other examples, the diameters are chosen so that an interference fit exists between the shaft and laminations. In still other examples, a clearance fit is chosen to allow the use of an adhesive to bond the laminations to the shaft. When the assembly is now rotated at speed, the parts of the lamination in the areas around the respective radii on which the poles are centred move outwards as before, but the parts of the lamination in the regions 44 around the interpole axes 39 are constrained from moving inwards, so they generate a contact pressure on the shaft. The faster the rotor is rotated, the higher the contact pressure generated. This is the opposite of the problem suffered by the prior art, where contact pressure is lost as the speed rises.

Figures 3, 4 and 5 illustrate the invention in general terms, viz, that by providing on the interpole axis (more generally, in a region radially between a pair of poles or elsewhere), an area of the lamination adjacent the shaft that is de-coupled from the forces which would otherwise cause it to move outwards from the shaft at high speed, it is possible to increase the contact pressure between the lamination and the shaft as the lamination rotates. The cut-out shape used to de-couple the bridge from the material which lies radially outwards from it is preferably carefully chosen so as not to give high stress levels at the ends of the bridge section. The yield stress of a lamination material can vary over a wide range from around 280 to 400MPa, depending on the material and its metallurgical state. Stress above the yield stress would lead to local yielding and possible failure at the ends of the bridge. The stress depends not only on the lamination material and the dimensions of the slot but also on the dimensions of many of the other features of the lamination.

In some embodiments, the slots 30 are configured as shown in Figure 6 with a shape which may be useful in avoiding high stress at the ends of the bridge. In these embodiments, the slots 30 are radially narrower in a middle region 60 than at the ends 62 and the ends 62 are formed at a radius larger than half the width of the slots 30 in the middle region 60.

The circumferential (i.e., the angular) length of the slot is also a parameter under the control of the designer and it will be clear that a short slot will reduce stress levels on the pole axis 42 but will reduce the area over which enhanced contact pressure is exerted on the shaft. Conversely, increasing the length of the slot increases the contact pressure but will lead to rising stress on the pole axis. The exact choice of slot length will therefore depend on the material being used and the dimensions of the lamination under consideration. A suitable total length will generally be around 80% of the circumference of the circumscribing circle of the slots and is unlikely to exceed 90%.

For example, the angular extent of each slot may be between 60% to 90% or 70% to 90%, for example 80%, of the angular spacing between the poles. For regularly spaced poles, the interpolar spacing is defined by 360°/n, where n is the number of poles. For irregularly spaced poles, the angular spacing between the poles may be defined as the angle spanned by two radii through corresponding points on adjacent poles. The corresponding points may be the centres of the respective pole faces, corresponding ends of the pole faces, corresponding corners of the salient poles, etc.

The radial width of the slot can be a suitable small dimension which is compatible with the method of lamination production. For example, if the laminations are being produced by laser cutting, wire erosion or spark erosion, then a radial width of less than 1mm, for example around 0.5mm may be possible. If the laminations are produced by punching, then a width of around 3mm is a more appropriate dimension. With punched laminations, it may be possible to have almost zero width slots by simply shearing the material along the length of the slot and then pressing the bridge back into place.

As was noted above in the description of the prior art, choosing tolerance bands for the lamination bore and shaft diameter is a difficult task because of the need to ensure contact pressure on the shaft throughout the range of speeds required for the rotor. The invention allows the designer freedom to use tolerances which may not otherwise be possible, because it provides a mechanism whereby the contact pressure on the shaft is increased with increasing speed, contrary to the prior art.

A further benefit may be gained by the use of adhesive in the assembly process. It is known to use an adhesive or bonding agent to secure the laminations to the shaft, the advantage usually being that a clearance fit is provided between the shaft and the lamination bore and this allows very easy assembly. However, adhesives typically have poor strength in tension, so at high speeds the adhesive will fail as the rotor bore grows outwards from the shaft. However, if used in conjunction with this invention, the adhesive in the regions under the slots is put under increasing compression as the speed rises and therefore retains its strength, enabling it to transmit torque between the shaft and the lamination. A suitable adhesive for this application is LOCTITE^{®} 14486™.

It will be appreciated that the precise configuration, shape, position and dimensions of the slots will depend on the properties and material of the rotor components (laminations in the specific embodiment described), its mechanical properties, whether adhesive is used, the desired range of rotational speeds and other performance criteria, all of which can be taken into account when designing the rotor components. Designs can be evaluated as to their mechanical and magnetic performance using finite-element methods and modified based on design experience of rotor component designs to design rotor components that provide suitable mechanical performance in terms of clamping forces on the shaft and stresses in the material, as well as desired magnetic performance.

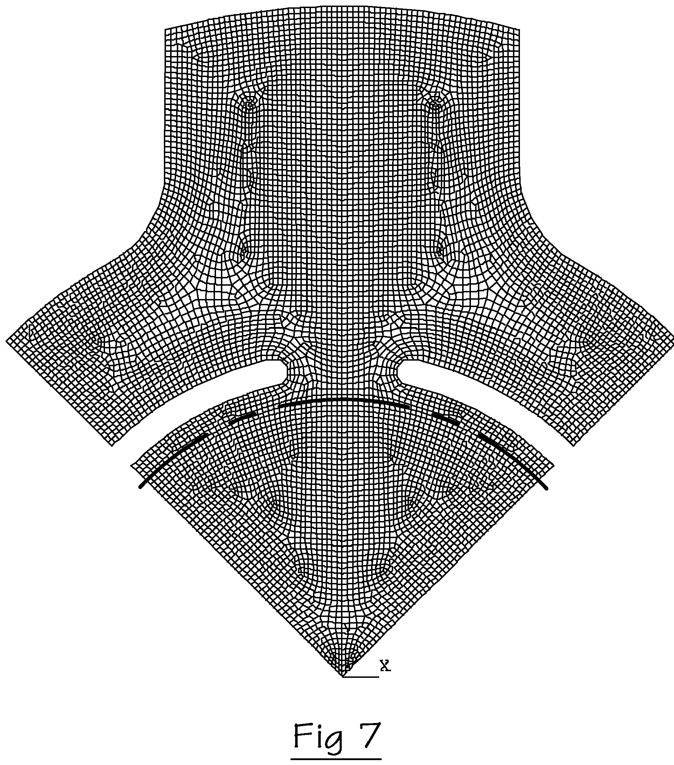

Those skilled in the art of lamination design are familiar with finite-element methods of calculating stress and contact pressures in laminations. For example, Figure 7 shows a representation of a sector of a rotor where a mesh of quadrilateral elements has been formed to represent the lamination and shaft. These elements can be assigned appropriate material properties and finite element methods are then used to evaluate the mechanical and/or magnetic properties of the structure. Several commercially available packages are available for performing such calculations, e.g. products from ANSYS Corporation.

The skilled person will appreciate that variation of the disclosed arrangements, particularly with respect to the illustrative slot sizes, proportions, configuration, shape and positions, is possible without departing from the scope of the claims. Accordingly, the above description of several embodiments is made by way of example and not for the purposes of limitation. It will be clear to the skilled person that modifications can be made to the arrangements without significant changes to the benefits and operation described above. The scope of protection claimed is intended to be limited only by the following claims.

## Claims

1. A rotor component for a rotor of a rotating electrical machine, the component defining:
a bore for accepting a shaft defining an axis of rotation for the rotor component;
a plurality of salient poles arranged around the bore;
one or more slots extending axially through the rotor component, each slot having a circumferential dimension that is larger than its largest radial dimension; and
a respective bridge portion of the rotor component disposed between each slot and the bore and proportioned such that a pressure exerted by the respective bridge portion on a shaft in the bore increases when the rotor component is rotated about the axis of rotation, wherein each bridge portion is located generally between adjacent poles.

2. A rotor component as claimed in claim 1, the number of slots being less than or equal to the number of poles.

3. A rotor component as claimed in any preceding claim, each slot and respective bridge portion being intersected by a respective interpolar axis bisecting an angle between a pair of adjacent poles and intersecting the axis of rotation.

4. A rotor component as claimed in claim 3, each slot and respective bridge portion being bisected by the respective interpolar axis.

5. A rotor component as claimed in any preceding claim, each slot and respective bridge portion having an angular extent of 50% to 90%, preferably 80% of an angular spacing between the respective poles.

6. A rotor component as claimed in any preceding claim, each bridge portion being profiled to have constant radial extent over at least a portion of its circumferential extent.

7. A rotor component as claimed in any preceding claim, each bridge portion having a radial dimension of less than 10% of the smallest radial dimension of the outer profile of the rotor component.

8. A rotor component as claimed in any preceding claim, each bridge portion having a radial dimension of less than 5% of the largest radial dimension of the rotor component.

9. A rotor component as claimed in any preceding claim, each slot having rounded end portions.

10. A rotor component as claimed in claim 9, in which the rounded end portions are radially wider than the radial width of a portion of the slot between the rounded end portions.

11. A rotor for a rotating electrical machine, the rotor comprising one or more rotor components as claimed in any preceding claim mounted for rotation on a shaft, wherein the one or more rotor components are bonded to the shaft with an adhesive.

12. A rotor for a rotating electrical machine, the rotor comprising a single rotor component as claimed in any one of claims 1 to 10 mounted on a shaft.

13. A reluctance machine comprising a rotor, the rotor comprising a rotor component as claimed in any one of claims 1 to 10.

14. A switched reluctance machine comprising a rotor, the rotor comprising a rotor component as claimed in any one of claims 1 to 10.

15. A rotor component as claimed in any one of claims 1 to 10, wherein the rotor component is a rotor lamination for stacking to form a rotor.

## Patentansprüche

1. Rotorkomponente für einen Rotor einer rotierenden elektrischen Maschine, wobei die Komponente definiert:
eine Bohrung zur Aufnahme einer Welle, die eine Drehachse für die Rotorkomponente definiert;
eine Vielzahl von Schenkelpolen, die um die Bohrung herum angeordnet sind;
eine oder mehrere Nuten, die sich axial durch die Rotorkomponente erstrecken, wobei jede Nut eine Umfangsgröße hat, die größer als seine größte radiale Größe ist; und
einen jeweiligen Brückenabschnitt der Rotorkomponente, der sich zwischen jeder Nut und der Bohrung befindet und so proportioniert ist, dass ein durch den jeweiligen Brückenabschnitt auf eine Welle in der Bohrung ausgeübter Druck steigt, wenn die Rotorkomponente um die Drehachse gedreht wird, wobei jeder Brückenabschnitt im Allgemeinen zwischen zwei benachbarten Polen angeordnet ist.

2. Rotorkomponente nach Anspruch 1, wobei die Anzahl von Nuten kleiner als die oder gleich der Anzahl von Polen ist.

3. Rotorkomponente nach einem der vorhergehenden Ansprüche, wobei jede Nut und jeweilige Brückenabschnitt von einer jeweiligen interpolaren Achse geschnitten werden, welche einen Winkel zwischen einem Paar benachbarter Pole halbiert und die Drehachse schneidet.

4. Rotorkomponente nach Anspruch 3, wobei jede Nut und jeweilige Brückenabschnitt von der jeweiligen interpolaren Achse halbiert werden.

5. Rotorkomponente nach einem der vorhergehenden Ansprüche, wobei jede Nut und jeweilige Brückenabschnitt eine Winkelgröße von 50% bis 90%, vorzugsweise 80% eines Winkelabstands zwischen den jeweiligen Polen haben.

6. Rotorkomponente nach einem der vorhergehenden Ansprüche, wobei jeder Brückenabschnitt dazu profiliert ist, über wenigstens einen Abschnitt seiner Umfangserstreckung eine konstante radiale Erstreckung zu haben.

7. Rotorkomponente nach einem der vorhergehenden Ansprüche, wobei jeder Brückenabschnitt eine radiale Abmessung von weniger als 10% der kleinsten radialen Abmessung des Außenprofils der Rotorkomponente hat.

8. Rotorkomponente nach einem der vorhergehenden Ansprüche, wobei jeder Brückenabschnitt eine radiale Abmessung von weniger als 5% der größten radialen Abmessung der Rotorkomponente hat.

9. Rotorkomponente nach einem der vorhergehenden Ansprüche, wobei jede Nut abgerundete Endabschnitte hat.

10. Rotorkomponente nach Anspruch 9, wobei die abgerundeten Endabschnitte radial breiter sind als die radiale Breite eines Abschnitts der Nut zwischen den abgerundeten Endabschnitten.

11. Rotor für eine rotierende elektrische Maschine, wobei der Rotor eine oder mehrere Rotorkomponenten nach einem der vorhergehenden Ansprüche aufweist, die zur Drehung an einer Welle angebracht sind, wobei die eine oder die mehreren Rotorkomponenten mit einem Klebstoff an die Welle geklebt sind.

12. Rotor für eine rotierende elektrische Maschine, wobei der Rotor eine einzige Rotorkomponente nach einem der Ansprüche 1 bis 10 aufweist, die an einer Welle angebracht ist.

13. Reluktanzmaschine mit einem Rotor, wobei der Rotor eine Rotorkomponente nach einem der Ansprüche 1 bis 10 aufweist.

14. Geschaltete Reluktanzmaschine mit einem Rotor, wobei der Rotor eine Rotorkomponente nach einem der Ansprüche 1 bis 10 aufweist.

15. Rotorkomponente nach einem der Ansprüche 1 bis 10, wobei die Rotorkomponente ein Rotorblechpaket ist, um einen Rotor zu bilden.

## Revendications

1. Composant de rotor pour un rotor d'une machine électrique tournante, le composant définissant :
un alésage pour accepter un arbre définissant un axe de rotation pour le composant de rotor ;
une pluralité de pôles saillants agencés autour de l'alésage ;
une ou plusieurs fentes s'étendant de façon axiale à travers le composant de rotor, chaque fente ayant une dimension circonférentielle qui est plus grande que sa dimension radiale la plus grande ; et
une partie formant pont respective du composant de rotor disposée entre chaque fente et l'alésage et proportionnée de sorte qu'une pression exercée par la partie formant pont respective sur un arbre dans l'alésage augmente lorsque le composant de rotor est tourné autour de l'axe de rotation, dans lequel chaque partie formant pont est située de manière générale entre des pôles adjacents.

2. Composant de rotor selon la revendication 1, le nombre de fentes étant inférieur ou égal au nombre de pôles.

3. Composant de rotor selon l'une quelconque des revendications précédentes, chaque fente et partie formant pont respective étant coupées par un axe interpolaire respectif partageant en deux un angle entre un couple de pôles adjacents et coupant l'axe de rotation.

4. Composant de rotor selon la revendication 3, chaque fente et partie formant pont respective étant partagées en deux par l'axe interpolaire respectif.

5. Composant de rotor selon l'une quelconque des revendications précédentes, chaque fente et partie formant pont respective ayant une étendue angulaire de 50 % à 90 %, de préférence 80 % d'un espacement angulaire entre les pôles respectifs.

6. Composant de rotor selon l'une quelconque des revendications précédentes, chaque partie formant pont étant à profil pour avoir une étendue radiale constante sur au moins une partie de son étendue circonférentielle.

7. Composant de rotor selon l'une quelconque des revendications précédentes, chaque partie formant pont ayant une dimension radiale inférieure à 10 % de la dimension radiale la plus petite du profil extérieur du composant de rotor.

8. Composant de rotor selon l'une quelconque des revendications précédentes, chaque partie formant pont ayant une dimension radiale inférieure à 5 % de la dimension radiale la plus grande du composant de rotor.

9. Composant de rotor selon l'une quelconque des revendications précédentes, chaque fente ayant des parties d'extrémité arrondies.

10. Composant de rotor selon la revendication 9, dans lequel les parties d'extrémité arrondies sont plus larges de façon radiale que la largeur radiale d'une partie de la fente entre les parties d'extrémité arrondies.

11. Rotor pour une machine électrique tournante, le rotor comprenant un ou plusieurs composants de rotor selon l'une quelconque des revendications précédentes, montés en rotation sur un arbre, dans lequel le ou les plusieurs composants de rotor sont liés à l'arbre avec un adhésif.

12. Rotor pour une machine électrique tournante, le rotor comprenant un composant de rotor unique selon l'une quelconque des revendications 1 à 10 monté sur un arbre.

13. Machine de réluctance comprenant un rotor, le rotor comprenant un composant de rotor selon l'une quelconque des revendications 1 à 10.

14. Machine de réluctance commutée comprenant un rotor, le rotor comprenant un composant de rotor selon l'une quelconque des revendications 1 à 10.

15. Composant de rotor selon l'une quelconque des revendications 1 à 10, dans lequel le composant de rotor est une stratification de rotor pour empilement pour former un rotor.
